# FASCICULE DE BREVET EUROPEEN

(11) **EP 0 362 904 B1**
(45) Date de publication et mention de la délivrance du brevet: **28.09.1994**
(21) Numéro de dépôt: 89121868.7
(22) Date de dépôt: 20.05.1987
(51) Int. Cl.: B31B 1/84, B29C 65/22, B29C 65/78

(54) **Dispositif de soudage d'un embout sur un film thermoplastique**
Vorrichtung zum Verschweissen eines Ventils mit einer Folie
Device for welding a mouth piece to a thermoplastic film

(30) Priorité: 21.05.1986 FR 8607206
(43) Date de publication de la demande: 11.04.1990
(62) Demande divisionnaire de: 87903336.3
(73) Titulaire: BAXTER INTERNATIONAL INC., Deerfield, IL 60015 (US)
(72) Inventeur: Susini, Etienne, F-94440 Villecresnes (FR); Soubrier, Pierre, B-1040 Bruxelles (BE)
(74) Mandataire: Fruchard, Guy

(56) Documents cités:
- DE-A- 1 479 724
- FR-A- 2 255 215
- GB-A- 1 191 701
- GB-A- 2 074 934
- US-A- 2 065 033
- US-A- 3 783 080

## Description

La présente invention concerne un dispositif de soudage d'un embout sur un film thermoplastique selon le préambule de revendication 1.

On connaît des machines pour la réalisation de poches équipées d'un embout à partir d'un film thermoplastique. Dans une étape de la réalisation des poches, les embouts doivent être soudés sur le film thermoplastique, généralement au droit de perforations préalablement réalisées dans le film. Le soudage de l'embout sur le film peut être réalisé soit par ultrasons, soit par un organe de soudage chauffé de façon continue, soit encore par une résistance chauffante alimentée de façon intermittente par un courant électrique.

Dans les dispositifs existants, l'embout n'est pas toujours positionné de façon convenable par rapport à la tête de soudage, de sorte qu'il existe un risque d'écrasement de l'embout lors du soudage.

A ce propos, il est connu en soi de prévoir un alésage de guidage dans la tête de soudage. Toutefois, si l'embout n'est pas positionné exactement en regard de l'alésage de guidage le risque d'écrasement subsiste. Par ailleurs, il est également connu en soi de prévoir des moyens de positionnement (voir DE-A-1 479 724 et GB-A-2 074 934)

Le but de la présente invention est d'assurer un positionnement relatif précis des embouts par rapport à la tête de soudage pour minimiser les risques d'écrasement de l'embout.

L'invention porte sur un dispositif de soudage d'un embout sur un film thermoplastique comportant un châssis, une plaque support portée par le châssis et mobile par rapport à celui-ci et une tête de soudage reliée rigidement à la plaque support, caractérisé en ce que la tête de soudage comporte au moins un alésage de guidage vertical et en ce que le dispositif comporte des mors mobiles disposés en-dessous de la tête de soudage, portés par des consoles reliées au châssis, et manoeuvrés par des vérins.

Ainsi, les embouts sont positionnés de façon précise juste avant le soudage par un maintien des embouts par les mors mobiles jusqu'au moment où une partie des embouts est engagée dans les cavités de la tête de soudage.

Selon un aspect avantageux de l'invention, le châssis est monté pivotant sur un arbre de pivotement porté par un bâti adjacent au film, l'arbre de pivotement s'étendant parallèlement à un bord du film. Ainsi, lorsque l'on désire procéder à une intervention sur le dispositif de soudage, l'ensemble du châssis et des organes montés sur celui-ci est basculé autour de l'arbre de pivotement et l'intervention est effectuée sur la tête de soudage sans risquer une pollution du film.

D'autres caractéristiques et avantages de l'invention ressortiront encore de la lecture de la description qui suit en liaison avec les dessins ci-joints parmi lesquels :
- la figure 1 est une vue de côté du dispositif de soudage selon l'invention partiellement en coupe selon la ligne I-I des figures 2 et 5 ;
- la figure 2 est une vue de dessus de la tête de soudage selon la ligne II-II de la figure 1.
- La figure 3 est une vue en coupe de la tête de soudage selon la ligne III-III de la figure 2.
- La figure 4 est une vue en perspective de la résistance chauffante avec ses tiges d'alimentation.
- La figure 5 est une vue de dessus des moyens de positionnement selon la ligne V-V de la figure 1 .
- La figure 6 est une vue de côté à échelle réduite de l'ensemble du dispositif.
- La figure 7 est une vue en coupe agrandie selon la ligne VII-VII de la figure 6 .
- La figure 8 est une vue de côté schématique d'une variante de réalisation de l'invention incluant des moyens de blocage de film.
- La figure 9 est une vue en perspective, partiellement coupée, des moyens de blocage de film.

En référence aux figures, le dispositif de soudage selon l'invention est destiné à souder des embouts généralement désignés en 1 sur un film thermoplastique 2. Le dispositif comporte un châssis formé par une plaque 3 s'étendant transversalement au film au-dessus de celui-ci . Une plaque support 4 est portée par le châssis 3 au moyen d'une tige 5 d'un vérin à double effet 6 . Lors des mouvements de la tige du vérin 5, la plaque support 4 est guidée par trois tiges de guidage 7 fixées en triangle à la plaque support 4 autour de la tige de vérin 5 et coulissant dans des douilles 8 portées par le châssis 3 .

Une tête de soudage généralement désignée en 9 est reliée rigidement à la plaque support 4 par les entretoises 10 .

Dans le mode de réalisation préféré illustré, la tête de soudage comporte une partie supérieure 11 et une partie inférieure 12 reliées entre elles par des vis 13 . La partie supérieure 11 comporte dans sa face inférieure une rainure en arc de cercle 14 dont les extrémités sont reliées à des canaux d'alimentation en fluide de refroidissement 15 percés dans la partie supérieure 11 de la tête de soudage et débouchant sur un côté de la partie supérieure 11 .La rainure 14 est de préférence encadrée par des joints d'étanchéité 16 qui assurent une bonne étanchéité vis-à-vis de l'extérieur.

Au voisinage de son centre, la tête de soudage comporte deux alésages verticaux 17 traversant la partie supérieure 11 et la partie inférieure 12 et ayant un diamètre légèrement supérieur à des organes tubulaires 18 des embouts 1. Les alésages 17 servent de guides pour les organes tubulaires 18 lors de la descente de la tête de soudage 9. De part et d'autre de chaque alésage 17, la tête de soudage 9 comporte des canaux verticaux 19 dans lesquels s'étendent des tiges d'alimentation 20 d'une résistance chauffante annulaire 21. Chaque canal 19 est fermé à son extrémité supérieure par un manchon électriquement isolant 22 à travers lequel s'étend une tige d'alimentation 20. A leur partie supérieure, les tiges d'alimentation 20 sont reliées par des connecteurs 23 à un câble d'alimentation électrique 24

A sa partie inférieure, la tête de soudage comporte une plaque 25 fixée à la partie inférieure 12, par exemple par collage, et formée d'une matière anti-adhérente vis-à-vis de la matière formant le film thermoplastique 2 et les embouts 1. La plaque 25 est percée d'ouvertures en alignement et de dimension égale aux alésages 17. La plaque 25 comporte également des ouvertures 26 en regard des canaux 19. Les ouvertures 26 sont de préférence d'une dimension légèrement supérieure à la dimension des tiges d'alimentation 20, mais légèrement inférieure à la largeur de la résistance annulaire 21.

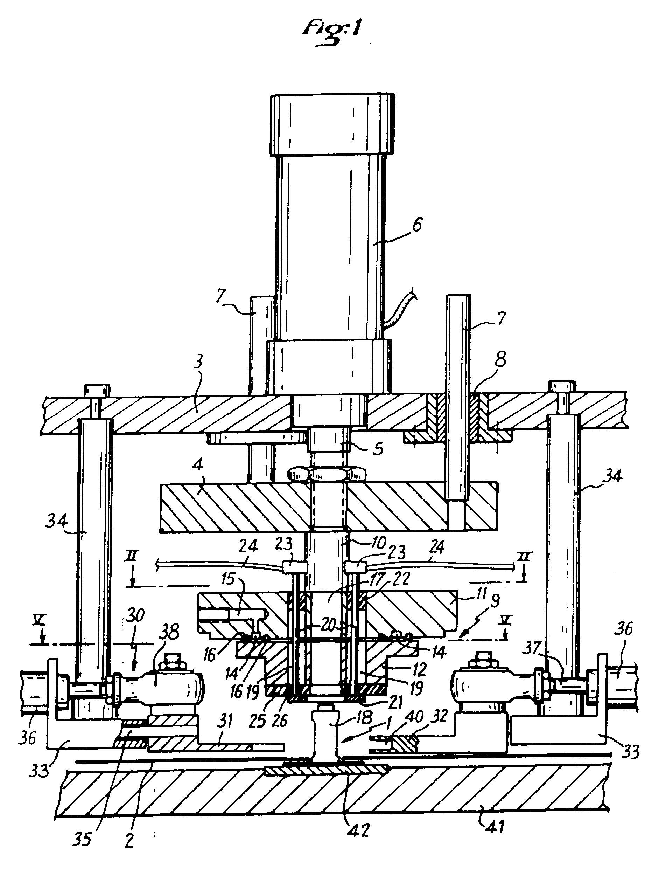

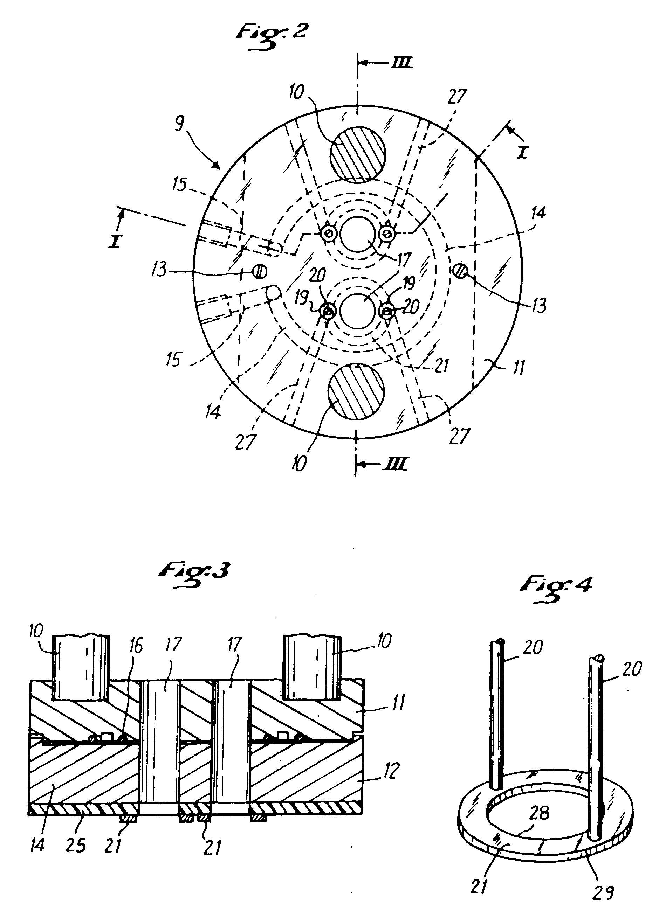

Les canaux verticaux 19 sont reliés à une source de fluide de refroidissement (non représentée), par exemple de l'air réfrigéré et filtré, par des canaux 27 percés dans la paroi de la partie inférieure 12 de la tête de soudage et débouchant sur le côté de celle-ci (figure 2).

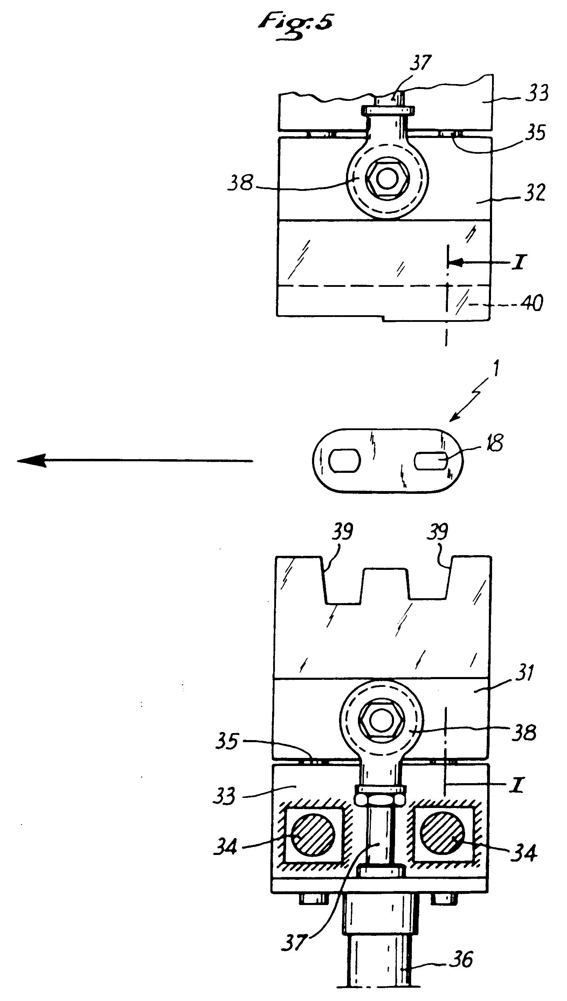

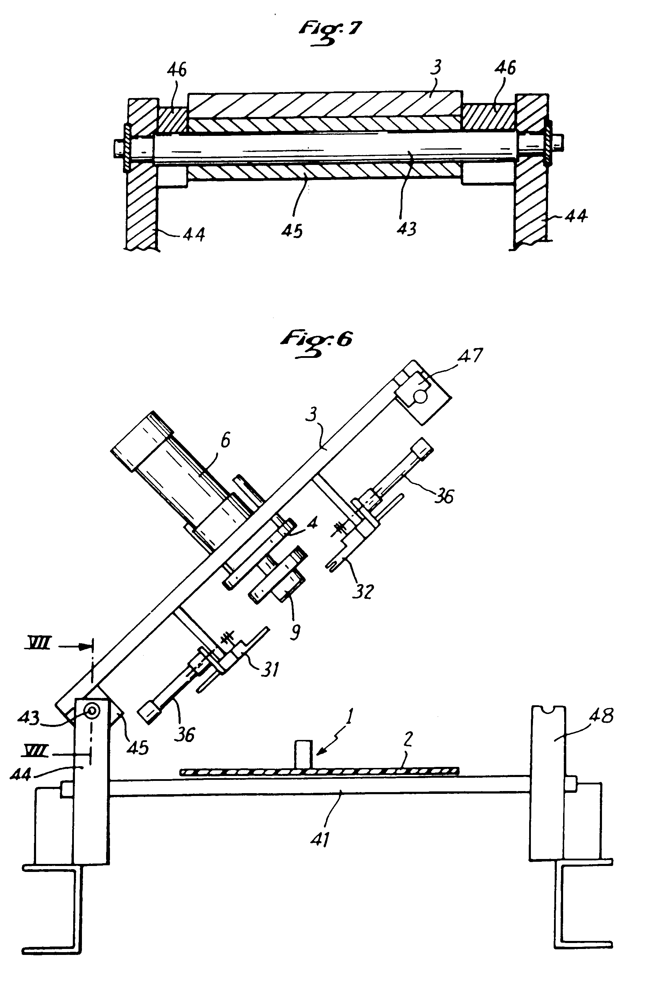

On voit sur la figure 4 que les tiges d'alimentation 20 ont de préférence un diamètre inférieur à la largeur de la résistance chauffante annulaire 21 et sont fixées à celle-ci transversalement à sa face supérieure, de préférence à mi-distance de son bord interne 28 et de son bord externe 29. Les tiges d'alimentation 20 sont fixées à la résistance chauffante 21 en deux points diamétralement opposés de celle-ci. Lorsque les résistances chauffantes 21, qui sont ici au nombre de deux, sont mises en place sur la tête de soudage, elles entourent chacune l'un des alésages verticaux 17.

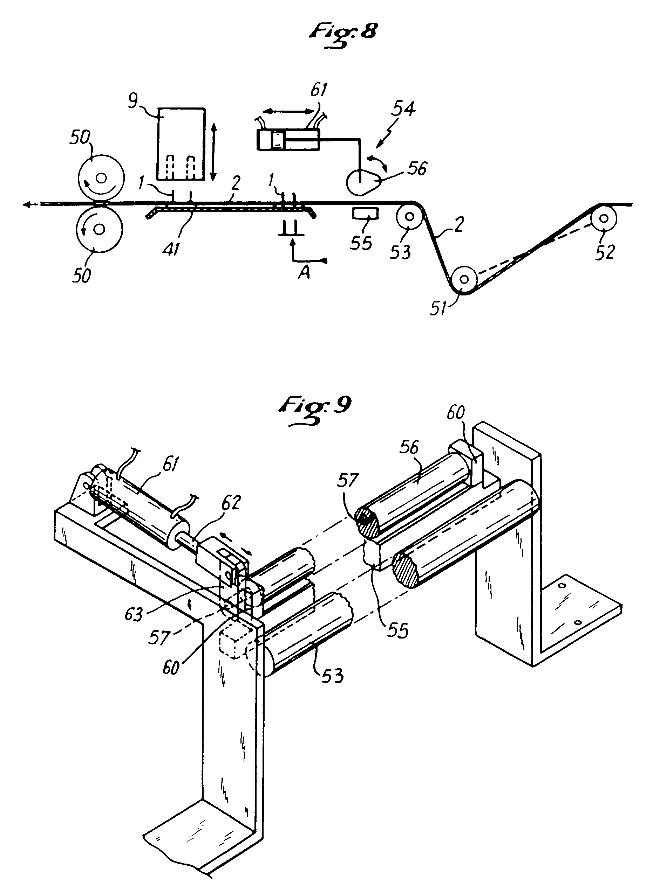

En dessous de la tête de soudage 9, le dispositif comporte des moyens de positionnement généralement désignés en 30. Les moyens de positionnement 30, représentés en détail sur les figures 1 et 5, en position ouverte, comprennent des mors de positionnement 31, 32, chacun monté de façon mobile sur une console 33 reliée au châssis 3 par des colonnettes 34. Le mouvement des mors 31,32, par rapport aux consoles 33, est guidé par des tiges de guidage 35 s'étendant dans des alésages horizontaux des consoles 33. Chacune des consoles 33 porte également un vérin 36 dont la tige 37 s'étend horizontalement et est raccordée par une rotule 38 à la partie supérieure de l'un des mors 31, 32. Le mors 31 comporte un talon sur lequel est fixé l'extrémité de la tige de vérin 37 et une plaque mince s'étendant horizontalement vers les organes tubulaires 18 de l'embout 1 disposé sous la tête de soudage. Cette plaque mince comporte des encoches 39 qui, lors de la fermeture des moyens de positionnement, viennent s'appuyer sur les organes tubulaires 18 et encadrer ceux-ci. Le mors 32 comporte de façon similaire un talon sur lequel est fixée l'extrémité de la tige de vérin 37 et une partie avant comportant une rainure 40 dans laquelle vient s'engager l'extrémité de la plaque mince du mors 31 lors de la fermeture des moyens de positionnement.

En dessous des moyens de positionnement, le dispositif comporte de préférence une contreplaque 41 comportant, à l'aplomb d'un embout 1, un morceau de matière anti-adhérente 42.

Afin de permettre une intervention sur le dispositif de soudage sans risquer de polluer le film thermoplastique 2 en place, le châssis 3 est de préférence, comme illustré par la figure 6, monté pivotant sur un arbre de pivotement 43 porté par un bâti 44 adjacent au film 2. L'arbre de pivotement 43 s'étend parallèlement au bord du film 2. Le châssis 3 est de préférence monté sur l'arbre de pivotement 43 par l'intermédiaire d'une poutrelle 45 percée d'un alésage longitudinal, comme illustré par la figure 7, le châssis 3 a une largeur de préférence inférieure à la distance entre les éléments de bâti 44, de sorte qu'il peut être déplacé en translation sur l'arbre de pivotement 43 selon une direction parallèle à cet arbre. Le positionnement précis du châssis 3 est assuré par des cales en U inversé 46 ayant chacune une épaisseur appropriée à la position qui est recherchée pour le châssis 3. A l'extrémité opposée à l'arbre de pivotement 43, le châssis 3 comporte des éléments de fixation 47 sur des éléments de bâti 48 disposés en vis-à-vis des éléments de bâti 44 afin de maintenir le châssis 3 par ses deux extrémités.

Le fonctionnement du dispositif selon l'invention est le suivant : le châssis est tout d'abord mis en position en utilisant les cales 46 appropriées afin que la tête de soudage 9 vienne au-dessus du point où les embouts s'arrêteront les uns à la suite des autres lors de l'avance pas à pas du film 2, cette avance pas à pas étant obtenue par des moyens indépendants de la tête de soudage et non représentés. Lorsqu'un embout 1 se présente au poste de soudage, les mors 31, 32, sont tout d'abord refermés par l'action des vérins 36. Les embouts 1 sont alors positionnés avec précision et le vérin 6 est actionné pour faire descendre la tête de soudage 9 selon une première phase. Dès que la partie supérieure des organes tubulaires 18 d'un embout 1 est engagée dans les alésages verticaux 17 de la tête de soudage, les mors 31,32,sont écartés afin de ne pas gêner la descente ultérieure de la tête de soudage. Le mouvement de la tête de soudage est poursuivi jusqu'à ce que les résistances chauffantes 21 viennent en contact avec le film thermoplastique 2. Une impulsion électrique est envoyée dans les câbles électriques 24 afin de faire passer un courant entre les tiges d'alimentation 20 et provoquer ainsi le chauffage de la résistance 21 et la fusion partielle du film thermoplastique 2 et de l'embase de l'embout 1 . Pendant l'opération de soudage proprement dite, un liquide de refroidissement est injecté par l'un des canaux d'alimentation 15 et s'évacue par l'autre canal d'alimentation 15 après avoir circulé dans la rainure en arc de cercle 14 . On évite ainsi un échauffement trop important de la tête de soudage 9. De plus, de l'air filtré et réfrigéré est injecté par les canaux d'alimentation 27 et s'écoule autour des tiges 20 puis à travers les ouvertures 26 en raison du jeu qui existe entre la plaque inférieure 25 et la résistance chauffante 21 . L'air de refroidissement sert d'une part à refroidir la jonction entre les tiges d'alimentation 20 et la résistance chauffante 21, cette jonction ayant normalement tendance à être portée à une température plus élevée que le reste de la résistance annulaire, et s'écoule ensuite sur le film thermoplastique 2. Après l'arrêt de l'impulsion de chauffage à travers la résistance chauffante 21, l'écoulement d'air à travers les ouvertures 26 sert donc à refroidir la résistance chauffante 21 ainsi que le film thermoplastique 2 et l'embout 1. Ainsi on évite que de la matière thermoplastique reste trop molle après le chauffage et n'adhère à la résistance chauffante 21, ce qui provoquerait la formation de bavures lors du relèvement ultérieur de la tête de soudage 9.

On comprendra de ce qui précède que les moyens de positionnement 30 formés par les mors mobiles 31, 32 peuvent être utilisés en relation avec d'autres têtes de soudage que celle qui est décrite à titre de mode de réalisation préféré dans la présente demande. En particulier, les moyens de positionnement 30 pourront être utilisés en relation avec une tête de soudage à haute fréquence comportant un ou plusieurs alésages de guidage pour la partie des embouts en saillie par rapport au film.

Les figures 8 et 9 illustrent un dispositif complémentaire également utilisé pour le positionnement précis des embouts au moment du soudage.

La figure 8 illustre de façon schématique un dispositif de soudage comprenant une tête de soudage 9 sous laquelle défile un film 2 équipé d'embouts 1 mis en place à un poste d'alimentation symbolisé par la flèche A. Le film 2 est entraîné en aval de la tête de soudage 9 selon un sens de déplacement du film 2 par des rouleaux d'entraînement 50 tournant en sens inverse l'un de l'autre et disposés par rapport au film pour pincer celui-ci . Les rouleaux d'entraînement sont mis en mouvement de façon intermittente d'une manière connue en soi et maintiennent le film immobile en aval de la tête de soudage lorsqu'ils sont arrêtés. Lors des différents mouvements du films 2, une tension régulière est assurée en amont du film par une barre de tension oscillante 51 montée en amont du dispositif de soudage entre deux rouleaux d'appui de film 52 et 53. Le rouleau 53 sert égalem ent de rouleau de renvoi pour maintenir la partie amont du film dans le plan de la contreplaque 41.

Etant donné que le film présente une certaine élasticité, il existe un risque d'allongement du film sous l'effet de la barre de tension 51, ce qui nuit à un positionnement précis des embouts 1 à l'aplomb de la tête de soudage 9.

Pour éviter cet inconvénient, on prévoit avantageusement selon l'invention des moyens de blocage de film généralement désignés en 54 et disposés en amont de la tête de soudage 9.

La figure 9 illustre un mode de réalisation préféré des moyens de blocage 54 . Selon ce mode de réalisation, les moyens de blocage comprennent des organes de pincement du film formés par une barre d'appui 55 montée fixe d'un côté du film et un organe excentrique 56 monté pivotant sur un côté opposé du film pour pivoter entre une position écartée du film illustrée par la figure 8, et une position en contact avec le film illustrée par la figure 9 . Sur le mode de réalisation représenté, l'organe excentrique 56 est un cylindre fixé de façon excentrique sur un arbre 57 lui-même monté pivotant sur des consoles 60 fixées au bâti de la machine. La position du cylindre 56 est déterminée par un vérin 61 porté par le châssis et convenablement relié de façon non représentée à un organe de commande associé à la commande des rouleaux d'entraînement 50. La tige 62 du vérin 61 est reliée à l'arbre 57 par une biellette 63 fixée en rotation par rapport à l'arbre 57.

Le fonctionnement de ce dispositif est le suivant: lorsque les rouleaux d'entraînement 50 sont mis en rotation, la biellette 63 est tirée par le vérin 61 et le rouleau excentrique 56 est écarté du film, permettant ainsi un mouvement de déplacement du film 2. Dès que les rouleaux d'entraînement 50 sont arrêtés, la biellette 63 est repoussée et le film 2 est pincé entre le rouleau excentrique 56 et la barre d'appui 55.

Bien entendu l'invention n'est pas limitée au mode de réalisation qui vient d'être décrit et est susceptible de variantes de réalisation qui apparaîtront à l'homme de métier. En particulier, bien que pour des raisons de commodité de montage les tiges d'alimentation 20 de la tête de soudage 9 aient été représentées perpendiculaires à la résistance chauffante 21, leur forme et leur orientation peuvent être adaptées aux nécessités de montage sur une tête de soudage particulière. De même, bien que selon la réalisation préférentielle illustrée, les canaux d'alimentation en fluide de refroidissement entourent les tiges 20, on peut prévoir une série de buses portées par la tête de soudage et dirigées vers le point de raccordement entre les tiges d'alimentation 20 et la résistance chauffante 21 .

En ce qui concerne la mobilité en translation du châssis 3, on peut prévoir de remplacer les cales 46 par un dispositif comportant une crémaillère réalisée sur un côté de l'arbre de pivotement 43 avec laquelle coopère un pignon denté solidaire du châssis 3 et entraîné en rotation par un volant .

## Revendications

1. Dispositif de soudage d'un embout (1) sur un film thermoplastique (2) comportant un châssis (3), une plaque support (4) portée par le châssis et mobile par rapport à celui-ci et une tête de soudage (9) reliée rigidement à la plaque support, caractérisé en ce que la tête de soudage (9) comporte au moins un alésage de guidage vertical (17) et en ce que le dispositif comporte des mors mobiles (31, 32) disposés en-dessous de la tête de soudage (9), portés par des consoles (33) reliées au châssis (3), et manoeuvrés par des vérins (36).

2. Dispositif de soudage selon la revendication 1, caractérisé en ce que le châssis (3) est monté pivotant sur un arbre de pivotement (43) porté par un bâti (44) adjacent au film, l'arbre de pivotement (43) s'étendant parallèlement à un bord du film (2).

3. Dispositif de soudage selon la revendication 2, caractérisé en ce que le châssis (3) est mobile en translation sur l'arbre de pivotement (43) selon une direction parallèle à cet arbre.

4. Dispositif de soudage selon l'une des revendications 1 à 3, comportant des moyens d'entraînement de film (50) en aval de la tête de soudage par rapport à un sens de déplacement du film, caractérisé en ce qu'il comporte en outre des moyens de blocage de film (54) en amont de la tête de soudage.

5. Dispositif de soudage selon la revendication 4, caractérisé en ce que les moyens de blocage de film comprennent des organes de pincement du film (55, 56).

6. Dispositif de soudage selon la revendication 5, caractérisé en ce que les organes de pincement comprennent une barre d'appui (55) montée fixe d'un côté du film et un organe excentrique (56) monté pivotant sur un côté opposé du film pour pivoter entre une position écartée du film et une position en contact avec le film.

## Claims

1. A device for sealing a port or fitment (1) on a thermoplastic film (2) that includes a frame (3), a support plate (4) carried by the frame and movable with respect to the frame and a welding head (9) rigidly connected to the support plate, characterized in that the sealing head (9) includes at least one vertical guiding boring (17) and in that the device includes movable jaws (31, 32) carried by consoles (33) connected to the frame (3) and maneuvered by jacks (36).

2. A sealing device according to claim 2, characterized in that the frame (3) is pivotally mounted on a pivoting shaft (43) carried by a frame element (44) adjacent to the film, the pivoting shaft (43) extending in a direction parallel to one edge of the film (2).

3. A sealing device according to claim 2, characterized in that the frame (3) is movable in translation on the pivoting shaft (43) in a direction parallel to that shaft.

4. A sealing device according to one of claims 1 to 3, that includes film driving means (50) downstream the sealing head with reference to a direction of movement of the film characterized in that it further includes film blocking means (54), upstream from the sealing head.

5. a sealing device according to claim 4, characterized in that the film blocking means includes film pinching members (55, 56).

6. A sealing device according to claim 5, characterized in that the pinching members include a support bar (55) fixedly mounted on one side of the film, and an excentric member (56) pivotally mounted on an opposite side of the film to pivot between a position remote from the film and a position in contact with the film.

## Patentansprüche

1. Vorrichtung zum Schweißen eines Ansatzstückes (1) an eine thermoplastische Folie (2), mit einer Grundplatte (3), einer Halteplatte (4), die von der Grundplatte getragen und relativ zu dieser beweglich ist, und mit einem Schweißkopf (9), der starr mit der Halteplatte verbunden ist, dadurch gekennzeichnet, daß der Schweißkopf (9) zumindest eine vertikale Führungsbohrung (17) hat und daß die Vorrichtung unter dem Schweißkopf (9) angeordnete, von mit der Grundplatte (3) verbundenen Trägerelementen (33) getragene und durch Zylinder (36) betätigte bewegliche Spannbacken (31, 32) aufweist.

2. Vorrichtung zum Schweißen nach Anspruch 1, dadurch gekennzeichnet, daß die Grundplatte (3) schwenkbar an einer Schwenkachse (43) gelagert ist, die von einem der Folie benachbarten Rahmen (44) getragen ist, wobei sich die Schwenkachse (43) parallel zu einer Kante der Folie (2) erstreckt.

3. Vorrichtung zum Schweißen nach Anspruch 2, dadurch gekennzeichnet, daß die Grundplatte (3) auf der Schwenkachse (43) in einer zu dieser Achse parallelen Richtung verschiebbar ist.

4. Vorrichtung zum Schweißen nach einem der Ansprüche 1 bis 3, mit einer in bezug auf die Transportrichtung der Folie stromabwärts des Schweißkopfes gelegenen Einrichtung (50) für den Transport der Folie, dadurch gekennzeichnet, daß die Vorrichtung ferner Mittel (54) zum Blockieren der Folie umfaßt, die stromaufwärts des Schweißkopfes angeordnet sind.

5. Vorrichtung zum Schweißen nach Anspruch 4, dadurch gekennzeichnet, daß die Mittel zum Blockieren der Folie Organe (55, 56) zum Festklemmen der Folie umfassen.

6. Vorrichtung zum Schweißen nach Anspruch 5, dadurch gekennzeichnet, daß die Organe zum Festklemmen auf der einen Seite der Folie eine fest montierte Auflageschiene (55) und auf der gegenüberliegenden Seite der Folie ein exzentrisches Organ (56) umfassen, das schwenkbar montiert ist zum Hin- und Herschwenken zwischen einer zur Folie beabstandeten Position und einer Kontaktposition mit der Folie.
